# EUROPEAN PATENT SPECIFICATION

(11) **EP 3 703 336 B1**
(45) Date of publication and mention of the grant of the patent: **29.07.2026**
(21) Application number: 17932054.4
(22) Date of filing: 17.11.2017
(51) Int. Cl.: H04L 1/18, H04W 76/15, H04B 7/26, H04W 76/19, H04W 88/08, H04W 92/12, H04L 47/122, H04L 69/40, H04L 1/1607

(54) **COMMUNICATION DEVICE AND COMMUNICATION METHOD**
KOMMUNIKATIONSVORRICHTUNG UND KOMMUNIKATIONSVERFAHREN
DISPOSITIF ET PROCÉDÉ DE COMMUNICATION

(43) Date of publication of application: 02.09.2020
(73) Proprietor: NTT DOCOMO, INC., Chiyoda-ku Tokyo 100-6150 (JP)
(72) Inventor: TOEDA, Teruaki, Tokyo 100-6150 (JP); UMESH, Anil, Tokyo 100-6150 (JP); UCHINO, Tooru, Tokyo 100-6150 (JP); HANAKI, Akihito, Tokyo 100-6150 (JP); OU, Hiroshi, Tokyo 100-6150 (JP)
(74) Representative: Hoffmann Eitle
(86) International application number: PCT/JP2017/041574
(87) International publication number: WO 2019/097705

(56) References cited:
- EP-A1- 3 122 115
- EP-A1- 3 643 110
- WO-A1-2009/116914
- WO-A1-2010/137106
- WO-A1-2018/237001
- WO-A1-2018/237001
- JP-A- 2001 036 586
- JP-A- 2004 048 408
- JP-A- 2017 195 238
- US-A1- 2015 085 646

## Description

### TECHNICAL FIELD

The present invention relates to a communication apparatus in a radio communication system.

### BACKGROUND ART

At present, in 3GPP (Third Generation Partnership Project), specification development of a new radio communication system has been in progress, which is referred to as an NR (New Radio Access Technology) system as a successor of the LTE (Long Term Evolution) system and the LTE-advanced system. It is noted that NR may be referred to also as **5G.**

In the NR system, introducing LTE-NR dual connectivity (LTE-NR DC) or multi RAT dual connectivity (MR DC) has been studied, in which data is divided between a base station (eNB) of the LTE system and a base station (gNB) of the NR system in a manner similar to dual connectivity in the LTE system, and the data is simultaneously transmitted/received between those base stations.

Also, in the NR system, a configuration in which plural distributed nodes (Distributed Unit: DU) are attached to extend from one central node (Central Unit: CU) is conceived as an architecture of a radio access network. In this configuration, separation of functions of CU-DU is performed. As an example, the CU has a function of a PDCP layer. The DU has a function of a RLC layer and lower layers.

Patent Document 1 describes a transceiver of a telecommunications system capable in exchanging protocol data units (PDUs) with another transceiver. Each PDU being identified using a sequence number. The transceiver is arranged to receive from the other transceiver a status report indicating positively acknowledged PDUs and negatively acknowledged PDUs. The transceiver is further configured to compare sequence numbers in the report with previously acquired sequence numbers from previous reports and to prevent retransmissions of one or several PDUs based on the comparison.

Patent Document 2 describes a master evolved node B (MeNB) configured for dual connectivity can receive one or more acknowledgements (ACKs) from a user equipment (UE) indicating packets that were successfully received at the UE from a secondary evolved node B (SeNB).

### RELATED-ART DOCUMENTS

### Non-Patent Document

Non-Patent Document 1: 3GPP TS 38.425 V0.2.0 (2017-10)
Patent Document 1: WO 2009/116914 A1
Patent Document 2: US 2015/085646 A1

### SUMMARY OF THE INVENTION

### PROBLEM TO BE SOLVED BY THE INVENTION

In the configuration in which the CU and DU are used as described above, the CU needs to check whether a packet transmitted therefrom is transmitted from the DU to the user equipment or not. In relation to this, Non-Patent Document 1, for example, discloses Downlink Data Delivery Status (hereinafter referred to as DDDS) procedure for reporting a delivery status of a downlink data. It is conceivable to report a delivery status of a packet (for example, PDCP PDU) from the DU to the CU by use of this procedure.

However, a retransmitted packet is not considered in the prior art described above. Thus, there is a problem in that a CU cannot determine whether or not a retransmitted packet transmitted therefrom has been transmitted from a DU to a user equipment.

It is noted that the above-described problem is also a problem that may occur irrespective of the configuration in use of the DU and the CU. The above-described problem is also a problem that may occur irrespective of the configuration in use of the DDDS procedure.

The present invention is achieved in view of the above problem. An object of the present invention is to provide a technique for enabling a communication apparatus to recognize a delivery status of a retransmitted packet transmitted by the same communication apparatus in a radio communication system.

### MEANS TO SOLVE THE PROBLEM

This object is accomplished by the subject-matter of the independent claims. The dependent claims concern particular embodiments.

### ADVANTAGE OF THE INVENTION

According to the disclosed technique, there is provided a technique for enabling a communication apparatus to recognize a delivery status of a retransmitted packet transmitted by the same communication apparatus in a radio communication system.

### BRIEF DESCRIPTION OF THE DRAWINGS

Fig. 1 is a view illustrating a configuration example of a radio communication system in an embodiment of the present invention.
Fig. 2 is a view illustrating a configuration example of separation of functions of CU-DU.
Fig. 3 is a sequence view for describing an example of basic operation.
Fig. 4 is a view for describing an example of operation of reporting DDDS.
Fig. 5 is a view for describing an example of operation of reporting DDDS.
Fig. 6 is a view illustrating a specific example of information to be added.
Fig. 7 is a view illustrating a specific example of a format of a DDDS PDU.
Fig. 8 is a view illustrating a configuration example of a DU.
Fig. 9 is a view illustrating a configuration example of a CU.
Fig. 10 is a view illustrating a hardware configuration.

### Mode for Carrying Out the Invention

An embodiment of the present invention (present embodiment) is described below by referring to the drawings. Note that the embodiment described below is only one example, and the embodiment to which the present invention is applied is not limited to the following embodiment.

Terms used in the existing documents of 3GPP standards are appropriately used in an embodiment to be described hereinafter. However, object elements similar to object elements designated with those terms may be referred to by use of other terms.

Also, the embodiment is hereinafter described, in which a DU is used as an example of a first communication apparatus of the present invention, and a CU is used as an example of a second communication apparatus. However, this is only one example. Applications of the present invention are not limited to a configuration related to the CU and DU. For example, the present invention is applicable to a configuration having plural base stations (for example, plural eNBs, eNB and gNB, plural gNBs, or the like).

### (System configuration)

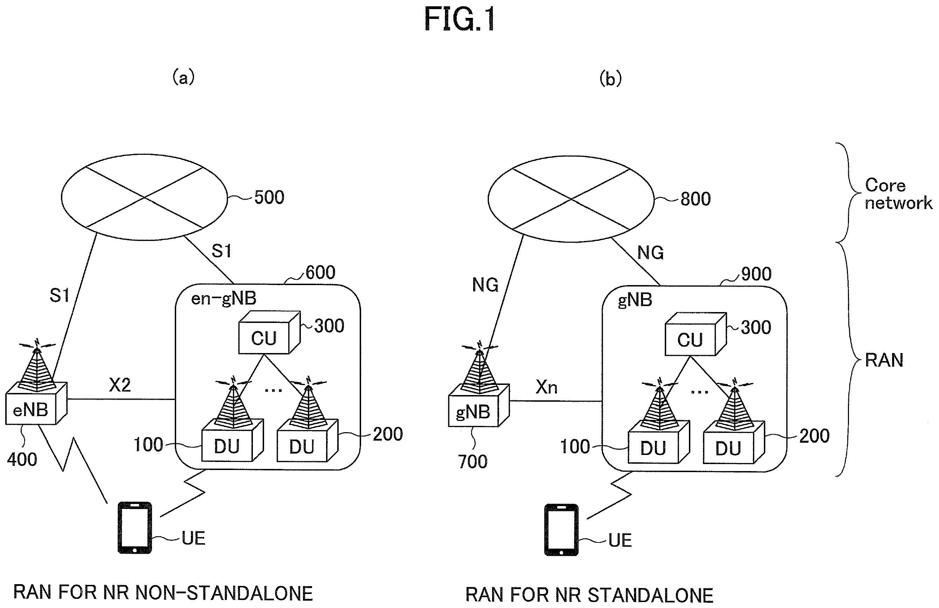

Fig. 1 illustrates configuration examples (a) and (b) of a communication system (also referred to as RAN (Radio Access Network)) in the present embodiment. It is noted that these configurations are one example.

A communication system illustrated in Fig. 1(a) is a RAN for NR non-standalone. As illustrated in Fig. 1(a), this communication system has an eNB 400 as an LTE base station, and an en-gNB 600 as an NR base station. A user equipment UE is communicable with the eNB 400 and the en-gNB 600. In this communication system, the eNB 400 and the en-gNB 600 are connected to an EPC (Evolved packet Core) 500 as a core network for LTE.

A communication system illustrated in Fig. 1(b) is a RAN for NR standalone. This communication system has a gNB 700 as an NR base station and a gNB 900 as an NR base station. The user equipment UE is communicable with each base station. Also, the gNB 700 and the gNB 900 are connected to 5GC (5G Core Network) 800 as a core network for 5G in this communication system.

In the configuration illustrated in Fig. 1(a) and (b), the NR base stations (en-gNB 600, gNB 300) have a CU 300 as a central node, and a DU 100 and a DU 200 as a plurality of distribution nodes attached to extend from the CU 300. For example, the CU 300 and the DUs 100 and 200 are interconnected by optical fibers.

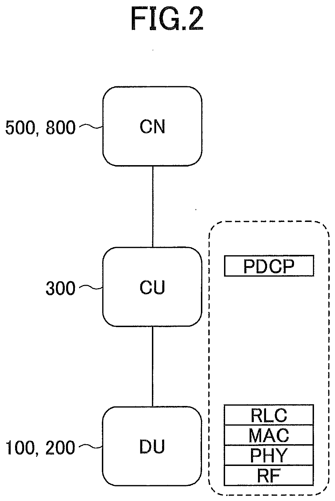

The CU and the DU are functionally separate in relation to the radio interface protocol. As an example, as illustrated in Fig. 2, the CU 300 has a function of the PDCP layer. Each of the DUs 100 and 200 has functions of RLC, MAC, PHY and RF. However, those are only one example. For example, each of the DUs 100 and 200 may have a function of part of the PDCP layer. An example of the user equipment UE is a wireless terminal, such as a smart phone and the like. The user equipment UE has functions of the respective layers from RF to PDCP.

In the configurations of the CU 300, the DU 100 and the DU 200 in Fig. 1(a) and (b), the CU 300, for example, distributes packets addressed to the user equipment UE received from the core network to the DU 100 and the DU 200. For example, distribution is so performed that packets with SN (sequence number) = 1 to 4 are transmitted to the DU 100, and packets with SN = 5 to 8 are transmitted to the DU 200. However, this is an example. Packets can be duplicated in the CU 300, and those can be transmitted to both of the DU 100 and the DU 200. It is noted in the present specification that a "packet" is intended to be a PDCP PDU, but not limited thereto. For example, a "packet" may be an IP packet, RLC PDU and MAC PDU. Also, a "packet" may be referred to as "data", "data unit" or "frame".

As described above, it is intended in the present embodiment to use a PDCP PDU as a packet. An outline of operation in relation to the PDCP layer will be hereinafter described.

On the transmission side, a PDCP entity performs ciphering processing, tampering detection, and header compression for a packet received from an upper layer, that is, for a PDCP SDU (Service Data Unit), and adds a PDCP SN (sequence number) to the header to transmit a PDCP PDU (Packet Data Unit) to the RLC layer. In contrast, in the reception side (assuming RLC-AM as an example), a reception window (window) is managed, and when a PDCP SN of a packet received from the transmission side falls within the reception window, deciphering processing (cipher decryption processing) is performed for a payload (PDCP SDU) of the received packet based on a COUNT value formed by an estimated HFN and a PDCP SN of the header. Subsequently, the PDCP entity transmits the processed packet to an upper layer and updates the reception window.

A reordering process for a packet is performed on the PDCP layer. At the time of performing reordering, the PDCP entity uses a reordering timer. The user equipment UE starts up the reordering timer upon detecting a miss. During the startup of this timer, a succeeding process of a PDCP PDU is suspended. If reception of a missing packet until the timer expiration is impossible, attempt to receive this packet is stopped, to resume the process.

An example of operation related to the embodiment is hereinafter described by referring to a configuration having the CU 300, the DU 100 and the DU 200 as an example.

### (Outline of the operation)

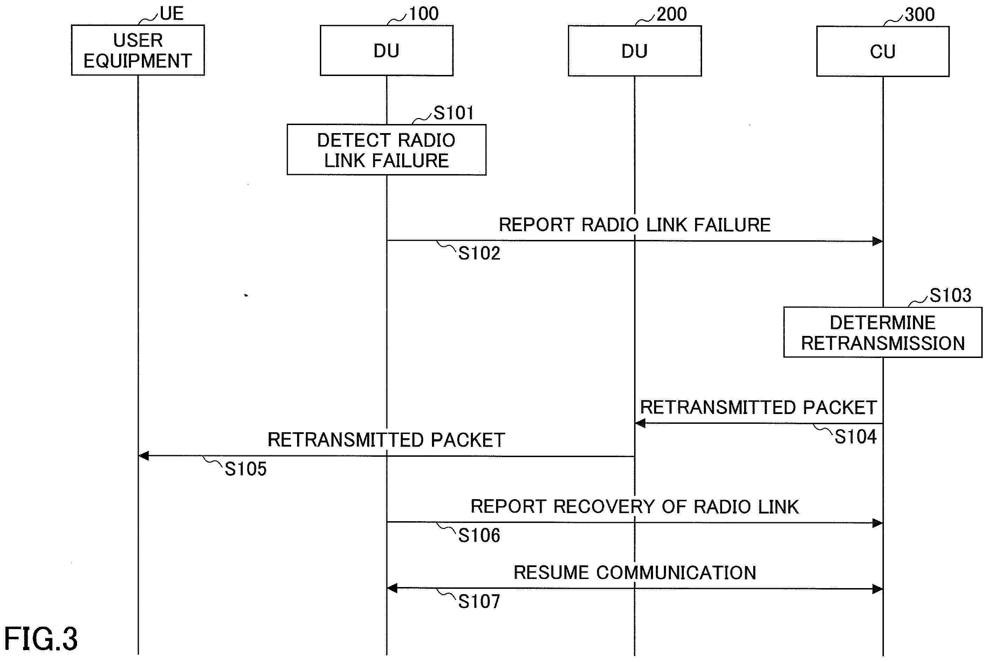

Fig. 3 is referred to, to describe the outline of the operation at the time of occurrence of a radio link failure.

In a step before S101 in Fig. 3, the user equipment UE is connected to each of the DU 100 and the DU 200, and communicates with each of the DU 100 and the DU 200 for packets. In S101, the DU 100 detects a radio link failure between itself and the user equipment UE.

In S102, the DU 100 reports occurrence of the radio link failure to the CU 300. For example, the DDDS procedure is used for this report. The report of a delivery status in the DDDS procedure (specifically a DDDS PDU) includes the SN of a packet of which the SN is the highest among the packets transmitted to the user equipment UE.

It is noted in the present embodiment that "transmitting a packet to the user equipment UE" may mean that an ACK from the user equipment UE was recognized in relation to the packet, or may mean that wireless transmission of a packet was possible irrespective of occurrence or non-occurrence of recognition of an ACK. Also, an event where an ACK from the user equipment UE was recognized may be expressed as "delivered". An event where wireless transmission of a packet was possible irrespective of occurrence or non-occurrence of recognition of an ACK may be expressed as "transmitted". However, the meanings of "delivered" and "transmitted" are not limited to those meanings.

The CU 300 upon receiving the report described above switches the traffic of the packet addressed to the user equipment UE to the side of the DU 200 in S103, and determines a packet to be retransmitted to the user equipment UE based on the received report in S102.

In S104, the CU 300 transmits the retransmitted packet to the DU 200. In S105, the retransmitted packet is transmitted from the DU 200 to the user equipment UE.

After this, upon recovery of the radio link failure between the user equipment UE and the DU 100, the DU 100 reports the recovery of the radio link failure to the CU 300 in S106. In S107, the CU 300 resumes transmission of a packet addressed to the user equipment UE to the DU 100.

In the present embodiment, the CU 300 in the packet retransmission in S104 adds information indicating retransmission to the packet, and transmits the packet with the added information to the DU 200. As a report of a delivery status of the downlink packet after retransmission in S104, the DU 200 transmits information of having transmitted the retransmitted packet to the CU 100. Those steps of the operation will be described hereinafter in detail.

### (Operational example in detail)

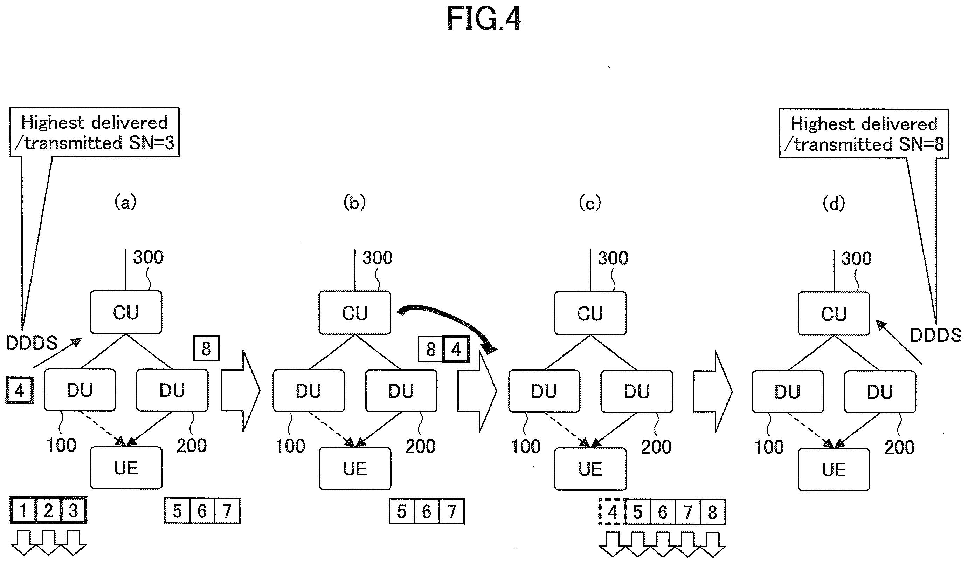

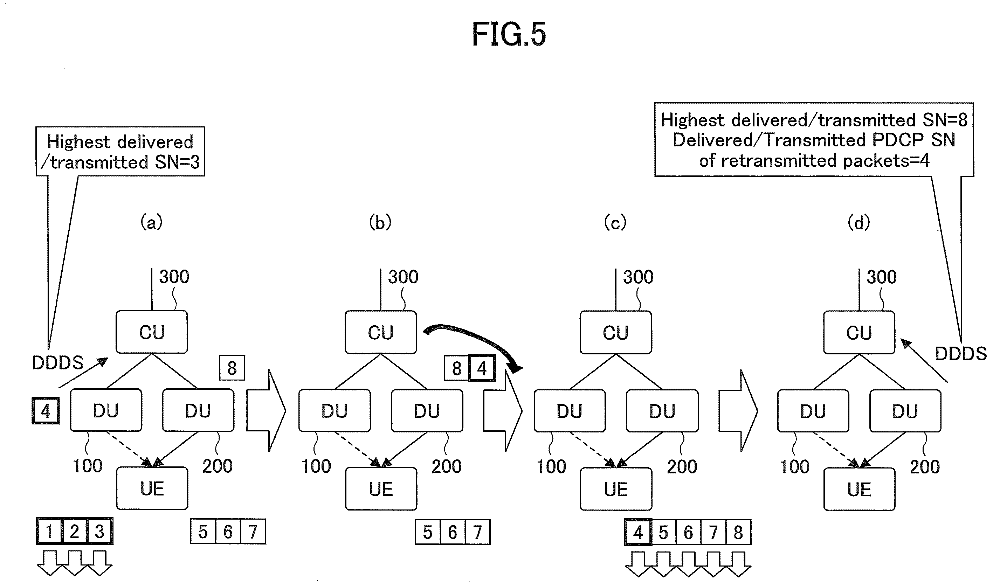

An operational example of a more specific form is described by referring to Figs. 4 and 5. In order to facilitate understanding effects of performing the above-described operation (addition of information and status report of a retransmitted packet), a first describing portion with reference to Fig. 4 describes operation in a condition without performing the above-described operation. A describing portion with reference to Fig. 5 describes operation in a condition with performing the above-described operation. In the description below, it is assumed that a status report or the like is performed on the basis of DDDS procedure (Non-Patent Document 1) as an example. Also, a packet with SN=X may be expressed as a packet (SN=X) in the description below.

In the state illustrated in Fig. 4(a), the CU 300 transmits a packet (SN=1), packet (SN=2), packet (SN=3), and packet (SN=4) to the DU 100 as packets addressed to the user equipment UE. The DU 100 transmits those packets successively to the user equipment UE. It is assumed herein that a radio link failure occurs between the user equipment UE and the DU 100 at the time of having transmitted the packet (SN=1), packet (SN=2) and packet (SN=3), such that the packet (SN=4) cannot be transmitted to the user equipment UE.

The DU 100 transmits to the CU 300 information representing occurrence of the above-described radio link failure, and a DDDS PDU including the SN (3 in the present example) of the packet of which the SN is the highest among the packets which have been received from the CU 300 and have been successfully transmitted to the user equipment UE.

However, the CU 300 in the state illustrated in Fig. 4(a) transmits the packets with SN=5 to 8 to the DU 200 on the side of the DU 200. The packets with SN=5 to 7 are transmitted from the DU 200 to the user equipment UE. The packet (SN=8) is stored in a buffer in the DU 200.

The CU 300, as it has received the DDDS PDU including SN=3, judges that the packets of SN=1 to 3 have been transmitted from the DU 100 to the user equipment UE, but the packet (SN=4) has not been transmitted.

Also, in Fig. 4(b), the CU 300 retransmits the packet (SN=4) to the DU 200. It is noted that the CU 300 has already transmitted the packet (SN=4) addressed to the user equipment UE to the DU 100. The transmission of the packet (SN=4) in Fig. 4(b) is "retransmission".

In Fig. 4(b), the DU 200 receives the packet (SN=4), so that the buffer is caused to store the packet (SN=4) as well as the packet (SN=8) which has been already stored.

In Fig. 4(c), the DU 200 transmits the packet (SN=4) and the packet (SN=8) to the user equipment UE.

In Fig. 4(d), the DU 200 transmits a DDDS PDU to the CU 300 as a report of the delivery status, the DDDS PDU including an SN of a packet of which the SN is the highest among the packets received from the CU 300 and transmitted to the user equipment UE (packets of SN=5 to 8 herein, because of no consideration of a retransmitted packet).

The CU 300 upon receiving the DDDS PDU described above can recognize that the packets with SN=5 to 8 transmitted initially therefrom to the DU 200 have been transmitted from the DU 200 to the user equipment UE. However, the CU 200 cannot recognize whether or not the retransmitted packet (SN=4) has been transmitted from the DU 200 to the user equipment UE. The CU 300 needs to recognize whether a packet transmitted therefrom has been transmitted to a reception side in order to manage (update or the like) a transmission status of a PDCP PDU. However, a difficulty occurs if recognition is impossible for a delivery status of the packet (SN=4) transmitted in the above-described manner.

An example of operation to solve the above-described problem is hereinafter described by referring to Fig. 5.

In the state illustrated in Fig. 5(a), the CU 300 transmits the packets of SN=1 to 4 to the DU 100 as packets for the user equipment UE, in a manner similar to the state of Fig. 4(a). The DU 100 transmits those packets to the user equipment UE one after another. However, a radio link failure occurs between the user equipment UE and the DU 100 after the packet (SN=1), packet (SN=2) and packet (SN=3) are transmitted. The packet (SN=4) cannot be transmitted to the user equipment UE.

The DU 100 transmits information representing occurrence of the above-described radio link failure to the CU 300, and transmits a DDDS PDU including the SN (3 in the present example) of the packet of which the SN is the highest among the packets which have been received from the CU 300 and have been successfully transmitted to the user equipment UE.

On the side of the DU 200, however, the CU 300 in the state of Fig. 5(a) transmits the packets with SN=5 to 8 to the DU 200. The packets with SN=5 to 7 are transmitted from the DU 200 to the user equipment UE. The packet (SN=8) is stored in the buffer in the DU 200.

The CU 300, as it has received the DDDS PDU including SN=3, judges that the packets of SN=1 to 3 have been transmitted from the DU 100 but the packet (SN=4) has not been transmitted.

In Fig. 5(b), the CU 300 retransmits the packet (SN=4) to the DU 200. In the condition of Fig. 5(b), the CU 300 adds information indicating retransmission to the retransmitted packet (SN=4). The retransmitted packet (SN=4) with the added information is transmitted to the DU 200. However, it is noted that the addition of this information is not indispensable, and this information may not necessarily be added.

Also, the information representing that the transmission is retransmission may be added by use of a free bit (spare bit) of a header of the packet (SN=4), or added in a form of adding a bit to the packet (SN=4). Also, the information indicating retransmission can be referred to as "retransmitted indication".

It is preferable herein that the DU 200 transmits a packet with a small SN to the user equipment UE with priority so as to avoid expiration of the reordering timer in the user equipment UE. However, in case of not performing the above-described addition, the DU 200 needs to perform processing of checking the SN, for example, thus, the processing is likely to delay. Conversely, performing the addition enables rapid processing. To be specific, the present application discloses with reference to the problem of possibility of occurrence of a delay due to checking the SN for transmitting a retransmitted packet with priority, so that addition of the above information is disclosed as a means for solving the problem. It is noted that addition of the information (retransmitted indication) can be performed, without addition of an SN of a retransmitted packet to a DDDS PDU to be described later.

The DU 200 having received the packet (SN=4) with the added information indicating retransmission recognizes that the packet (SN=4) is a retransmitted packet on the basis of the information, and can transmit the packet (SN=4) to the user equipment EU with priority over the packet (SN=8) having been stored already in the buffer. To be specific, in Fig. 5(c), the DU 200 transmits the packet (SN=4) first among the two packets (packet (SN=4) and packet (SN=8)) to be transmitted to the user equipment UE, and then transmits the packet (SN=8). It is possible in this operation to avoid timer expiration of the reordering timer in the user equipment UE.

If information indicating retransmission is not added, the DU 200 may check an SN in a header of each packet to be transmitted to the user equipment UE as described above, to transmit a packet with a smaller SN to the user equipment UE with priority. Also, according to this configuration, expiration of the reordering timer in the user equipment UE can be avoided.

In Fig. 5(d), the DU 200 transmits a DDDS PDU to the CU 300 as a report of the delivery status with the DDDS PDU, the DDDS PDU including an SN of a packet of which the SN is the highest among the packets received from the CU 300 and transmitted to the user equipment UE (packets of SN=5 to 8 without including a retransmitted packet), and including an SN of the retransmitted packet transmitted to the user equipment UE (packet (SN=4) in the present example). It is noted that the DU 200 may report a DDDS PDU including the SN of the retransmitted packet and a DDDS PDU including the SNs of the initially transmitted packets to the CU 300 discretely.

The CU 300 upon receiving the DDDS PDU described above can confirm that the packets with SN=5 to 8 having been transmitted to the DU 200 by itself initially have been transmitted to the user equipment UE, and that the packet (SN=4) as a retransmitted packet has been transmitted to the user equipment UE.

Also, it is possible in each DU to perform transmission of a DDDS PDU, for example, periodically, or at each time that packets of a predetermined number are transmitted to the user equipment UE, or at the time of another trigger.

As to the SN of the retransmitted packet to be included in a DDDS PDU, SNs of plural retransmitted packets may be included. For this case, a range of the SNs of the retransmitted packets (for example, SN=1 at the beginning and SN=3 at the end, assuming that SN=1 to 3) may be included. Also, the DU 200 may transmit each of an SN of a retransmitted packet of which an ACK from the user equipment UE could be recognized, and an SN of a retransmitted packet transmitted to the user equipment UE irrespective of whether an ACK could be recognized, to the CU 300 in a manner included in a DDDS PDU.

It is noted that using a DDDS PDU is only one example for reporting the delivery status. Information other than a DDDS PDU may be used. Furthermore, a DDDS PDU and other information may be referred to collectively as delivery status information.

### (Example of detailed information)

A specific example of DDDS PDU including the above-mentioned information indicating retransmission and information related to the retransmitted packet is described next.

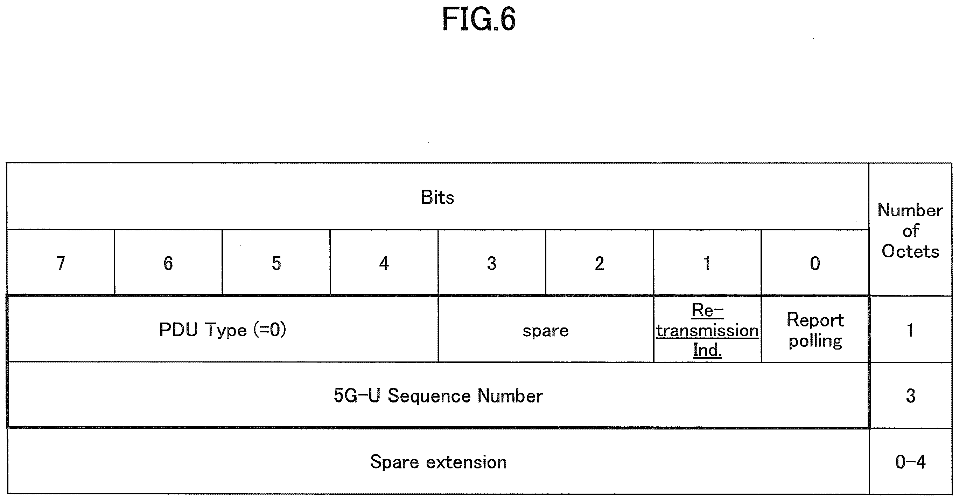

Fig. 6 illustrates an example of information to be added to the retransmitted packet to be transmitted from the CU 300 to the DU 200. Fig. 6 illustrates a change from "Figure 5.5.2.1-1: DL USER DATA (PDU Type 0) Format" in Non-Patent Document 1, and a portion of the change (added portion) is underlined. As illustrated in Fig. 6, an area of spare in Non-Patent Document 1 is caused to include the retransmitted indication as described above.

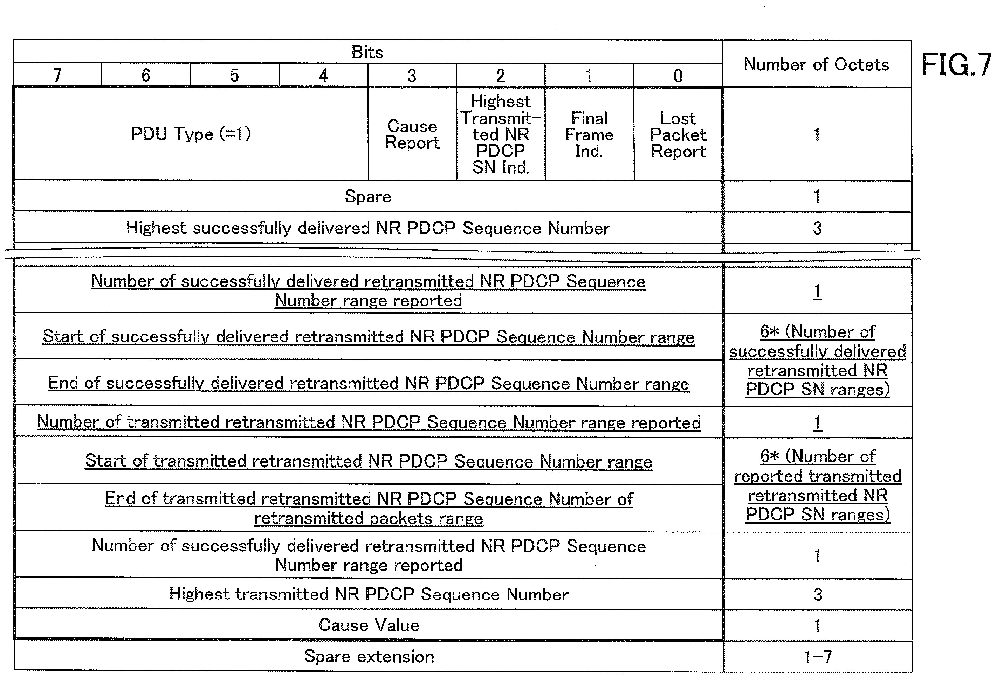

Fig. 7 illustrates an example of a format of a DDDS PDU to be transmitted from the DU 200 to the CU 300. Fig. 7 illustrates a change from "Figure 5.5.2.1-1: DL DATA DELIVERY STATUS (PDU Type 1) Format" in Non-Patent Document 1, and a portion of the change (added portion) is underlined.

As illustrated in Fig. 7, the following are added: "Number of successfully delivered retransmitted NR PDCP Sequence Number range reported", "Start of successfully delivered retransmitted NR PDCP Sequence Number range", "End of successfully delivered retransmitted NR PDCP Sequence Number range", "Number of transmitted retransmitted NR PDCP Sequence Number range reported", "Start of transmitted retransmitted NR PDCP Sequence Number range", and "End of transmitted retransmitted NR PDCP Sequence Number range of retransmitted packets range" in the present example. It is noted that it is not essential to add all of those in the present embodiment. For example, a part of those may be added. Also, information different from information illustrated in Fig. 7 may be added.

### (Device configuration)

A configuration example of functions of the CU 300 and the DU 100 as communication apparatuses for executing processing and operation described above is described next. It is noted that the DU 100 and the DU 200 have the same configuration. The above-described operation can be performed by each of the DU 100 and the DU 200. A configuration for the DU 100 as an example is disclosed herein. Each of the apparatuses has all the functions described in the present embodiment. However, each of the apparatuses may have only part of all the functions described in the present embodiment.

### <DU 100>

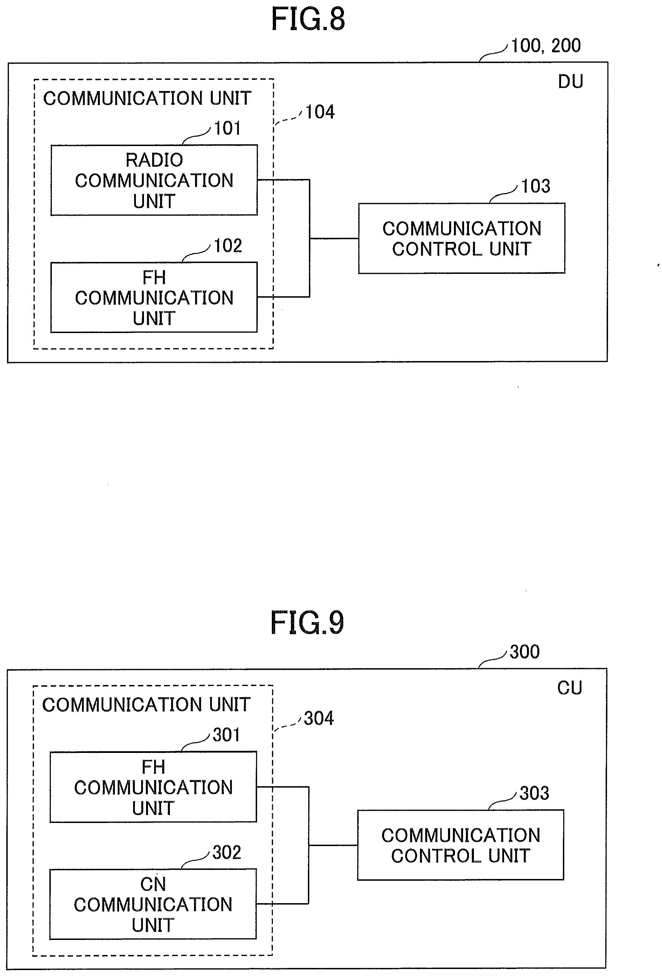

Fig. 8 is a view illustrating one example of a functional arrangement of the DU 100 (and also a functional arrangement of the DU 200). As illustrated in Fig. 8, the DU 100 includes a radio communication unit 101, a FH (fronthaul) communication unit 102 and a communication control unit 103. Also, a configuration including the radio communication unit 101 and the FH communication unit 102 is referred to as a communication unit 104. The functional arrangement illustrated in Fig. 8 is only one example. Division of the functions and names of functional units can be determined optionally so that tasks related to the embodiment of the present invention can be performed.

The radio communication unit 101 communicates with the user equipment UE by radio. The FH communication unit 102 communicates with the CU 300. The communication control unit 103 performs control related to retransmission described in the present embodiment. It is noted that functions of the communication control unit 103 may be included in the communication unit 104.

For example, the DU is a communication apparatus used as the first communication apparatus in a radio communication system including the first communication apparatus (example: DU) and a second communication apparatus (example: CU). In this configuration, for example, the communication unit 104 receives a retransmitted packet to the user equipment from the second communication apparatus, and transmits this retransmitted packet to the user equipment. Also, the communication unit 104 transmits delivery status information including the sequence number of the retransmitted packet to the second communication apparatus.

For example, the communication unit 104 receives the retransmitted packet with added information indicating retransmission from the second communication apparatus. Also, the communication unit 104 transmits, for example, the retransmitted packet to the user equipment with priority over a non-retransmission packet. Also, the delivery status information includes, for example, the sequence number of the retransmitted packet and a sequence number of a non-retransmission packet transmitted to the user equipment.

### <CU 300>

Fig. 9 illustrates one example of a functional arrangement of the CU 300. As illustrated in Fig. 9, the CU 300 includes an FH communication unit 301, a CN communication unit 302 and a communication control unit 303. Also, a configuration including the FH communication unit 301 and the CN communication unit 302 is referred to as a communication unit 304. The functional arrangement illustrated in Fig. 9 is only one example. Division of the functions and names of functional units can be determined optionally so that tasks related to the embodiment of the present invention can be performed.

The FN communication unit 301 communicates with the DU. The CN communication unit 302 communicates with the core network. The communication control unit 303 performs control related to retransmission described in the present embodiment. It is noted that the function of the communication control unit 303 may be included in the communication unit 304.

For example, the CU is a communication apparatus used as the second communication apparatus in the radio communication system including the first communication apparatus (example: DU) and the second communication apparatus (example: CU). For example, the communication control unit 303 determines a sequence number of a packet untransmitted to the user equipment on the basis of the sequence number of the packet transmitted to the user equipment. The communication unit 304 adds information representing that the untransmitted packet is a retransmitted packet to this packet untransmitted to the user equipment, and transmits the packet with the added information to the first communication apparatus.

### <Hardware configuration>

The block diagrams (Figs. 8-9) used for describing the above-described embodiment illustrate blocks in units of functions. These functional blocks (components) are implemented by any combination of hardware and/or software. Furthermore, means for implementing each functional block is not particularly limited. Namely, each functional block may be implemented by a single device with plural elements that are physically and/or logically coupled, or may be implemented by plural devices obtained by directly and/or indirectly (e.g., by wire and/or wirelessly) connecting the two or more devices separated physically and/or logically.

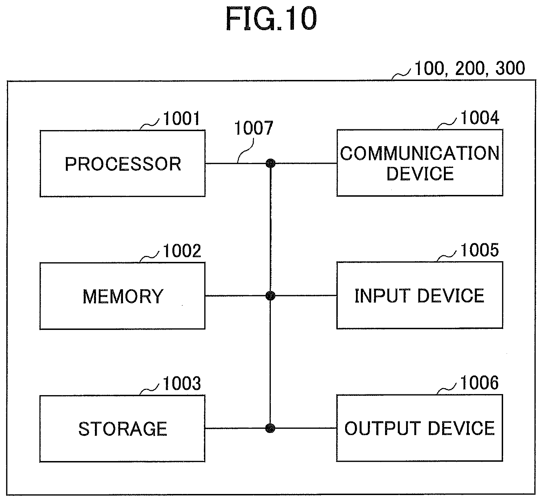

For example, the CU 300 and the DUs 100 and 200 in the embodiment of the present invention may function as computers for performing processes related to the embodiment according to the present invention. Fig. 10 is a diagram illustrating a hardware configuration of the CU 300 and the DUs 100 and 200 according to the embodiment of the present invention. Each of the CU 300 and the DUs 100 and 200 described above can be configured physically as a computer device including a processor 1001, a memory 1002, storage 1003, a communication device 1004, an input device 1005, an output device 1006, a bus 1007 and the like.

Note that, in the following description, the term "apparatus" may be replaced with a circuit, device, unit and the like. The hardware configuration of the CU 300 and the DUs 100 and 200 may be configured to include one or more of the respective devices illustrated in the figures and denoted at 1001-1006, or may be configured without including a part of the devices.

The respective functions in the CU 300 and the DUs 100 and 200 are realized by reading predetermined software (programs) on hardware such as the processor 1001, the memory 1002 and the like, performing calculation in the processor 1001, and controlling communication in the communication device 1004 and reading and/or writing of data in the memory 1002 and the storage 1003.

For example, the processor 1001 causes an Operating System to operate so as to control the entire computer. The processor 1001 may be formed of a central processing unit (CPU: Central Processing Unit) including an interface with a peripheral device, control device, arithmetic unit, register, and the like.

Furthermore, the processor 1001 reads a program (program code), software module, or data from the storage 1003 and/or the communication device 1004 to the memory 1002, and executes various processes in accordance with these. As the program, a program is used that is for causing a computer to execute at least a part of the operation described in the embodiment above. For example, the respective functions of the CU 300 and the DUs 100 and 200 may be implemented by a control program stored in the memory 1002 and executed by the processor 1001. It is described that the above-described various processes are performed by the single processor 1001, but they may be simultaneously or sequentially performed by two or more processors 1001. The processor 1001 may be implemented by one or more chips. Note that the program may be transmitted from a network through an electrical communication line.

The memory 1002 is a computer readable recording medium, and may be formed of, for example, at least one of a ROM (Read Only Memory), EPROM (Erasable Programmable ROM), EEPROM (Electrically Erasable Programmable ROM), RAM (Random Access Memory) and the like. The memory 1002 may be referred to as a register, cache, main memory (main storage device) and the like. The memory 1002 can store a program (program code), a software module and the like executable for performing processing according to one embodiment of the present invention.

The storage 1003 is a computer readable recording medium, and can be formed of, for example, at least one of an optical disc such as a CD-ROM (Compact Disc ROM), hard disk drive, flexible disc, magneto-optical disk (for example, compact disk, digital versatile disk, and Blu-ray (registered trademark) disk), smart card, flash memory (e.g., card, stick and key drive), floppy (registered trademark) disk, magnetic strip, and the like. The storage 1003 may be referred to as an auxiliary storage device. The above-described storage medium may be, for example, a database, server, or any other appropriate medium, including the memory 1002 and/or the storage 1003.

The communication device 1004 is hardware (transmission/reception device) for executing communication between computers through a wired and/or wireless network, and is also referred to as, for example, a network device, network controller, network card, communication module, and the like. For example, a communication unit of each of the devices may be implemented by the communication device 1004.

The input device 1005 is an input device for receiving an input from the outside (e.g., a keyboard, mouse, microphone, switch, button, sensor and the like). The output device 1006 is an output device for implementing an output to the outside (e.g., a display, speaker, LED lamp and the like). Note that the input device 1005 and the output device 1006 may be configured to be integrated (for example, a touch panel).

Furthermore, the respective devices, such as the processor 1001 and the memory 1002, are connected by the bus 1007 for communication of information. The bus 1007 may be formed of a single bus, or may be formed of different buses among the devices.

Furthermore, the CU 300 and the DUs 100 and 200 may be constituted to include hardware, such as a microprocessor, digital signal processor (DSP: Digital Signal Processor), ASIC (Application Specific Integrated Circuit), PLD (Programmable Logic Device), FPGA (Field Programmable Gate Array), and the like. By the hardware, a part of or all of the functional blocks may be implemented. For example, the processor 1001 may be implemented by at least one of these hardware components.

### (Conclusion of the embodiment)

As has been described heretofore, according to the embodiment of the present invention, a communication apparatus used as a first communication apparatus in a radio communication system including the first communication apparatus and a second communication apparatus is provided, characterized in comprising a communication unit configured to receive a retransmitted packet addressed to a user equipment from the second communication apparatus, and to transmit the retransmitted packet to the user equipment, the communication unit transmitting delivery status information including a sequence number of the retransmitted packet to the second communication apparatus.

According to the above configuration, a technique enabling a communication apparatus to recognize a delivery status of a retransmitted packet transmitted by the communication apparatus is provided in a radio communication system.

The communication unit may receive the retransmitted packet to which information indicating retransmission is added from the second communication apparatus. Owing to this configuration, the retransmitted packet can be transmitted with priority without checking an SN.

The communication unit may transmit the retransmitted packet to the user equipment with priority over a non-retransmission packet. Owing to this configuration, it is possible to increase possibility of avoiding timer expiration of a reordering timer in the user equipment.

The delivery status information may include the sequence number of the retransmitted packet and a sequence number of a non-retransmission packet transmitted to the user equipment. Owing to this configuration, the second communication apparatus can appropriately recognize packets including the retransmitted packet transmitted from the first communication apparatus to the user equipment.

Also, according to the present embodiment, a communication apparatus used as a second communication apparatus in a radio communication system inclusive of a first communication apparatus and the second communication apparatus is provided, characterized in comprising a communication control unit configured to determine a sequence number of a packet untransmitted to the user equipment based on a sequence number of a packet transmitted to the user equipment, and a transmission unit configured to add information to the packet untransmitted to the user equipment to represent that the packet is a retransmitted packet, and to transmit the packet with the added information to the first communication apparatus.

It is possible according to the above-described configuration to transmit a retransmitted packet to the user equipment rapidly without checking an SN.

### (Supplement to the embodiment)

The embodiment of the present invention has been described above; however, the disclosed invention is not limited to the embodiment, and a person ordinarily skilled in the art will appreciate various variations, modifications, alternatives, replacements and the like. Specific examples of numerical values are used in the description in order to facilitate understanding of the invention, but these numerical values are merely examples, and any appropriate values may be used, unless otherwise indicated. Divisions of the described items in the above description are not essential to the present invention. Depending on necessity, subject matter described in two or more described items may be combined and used, and subject matter described in a described item may be applied to subject matter described in another described item (unless contradicted). A boundary of a functional unit or a processor in the functional block diagrams may not necessarily correspond to a boundary of a physical component. An operation by a plurality of functional units may be physically executed by a single component, or an operation of a single functional unit may be physically executed by a plurality of components. In the sequence charts described in the embodiment, the order can be changed reversely, unless those are contradicted. For the convenience of description, the CU 300 and the DUs 100 and 200 are described by using the functional block diagrams; however, such devices may be implemented in hardware, software, or combinations thereof. The software to be operated by the processor included in each device in accordance with the embodiment of the present invention may be stored in any appropriate storage medium, such as a random access memory (RAM), flash memory, read-only memory (ROM), EPROM, EEPROM, register, hard disk drive (HDD), removable disk, CD-ROM, database, server and the like.

Notification of information is not limited to the aspects/embodiment described in this specification, and may be given by any other methods. For example, the notification of information may be performed by physical layer signaling (for example, Downlink Control Information (DCI), Uplink Control Information (UCI)), higher layer signaling (for example, Radio Resource Control (RRC) signaling, Medium Access Control (MAC) signaling, broadcast information (Master Information Block (MIB), System Information Block (SIB))), other signals, or a combination thereof. Further, the RRC signaling may be referred to as an RRC message and may be, for example, an RRC Connection Setup message, an RRC Connection Reconfiguration message, or the like.

Each of aspects/embodiment described in the present specification may be applied to LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), a system using other appropriate systems, and/or a next generation system expanded based on these systems.

The processing procedures, the sequences, the flowcharts and the like of the respective aspects/embodiment described in this specification may be reversed in order unless there is a contradiction. For example, the method described in this specification presents elements of various steps in an exemplary order and is not limited to a presented specific order.

A specific operation disclosed to be performed in a base station eNB in the present specification may be performed in an upper node in some cases. Also, the specific operation disclosed to be performed in the base station eNB in the present specification may be performed in a base station gNB. In a network composed of one or a plurality of network nodes having the base station eNB, it is apparent that various operations that are performed for communication with the user equipment UE can be performed by the base station eNB and/or another network node different from the base station eNB (e.g. MME or S-GW, though not limited thereto). Although the case where another network node different from the base station eNB is single is described in the example above, a combination of a plurality of other network nodes (e.g. MME and S-GW) may be used.

The respective aspects/embodiment disclosed in the present specification can be used singly, used in combination, and used by switching in operation.

The user equipment UE can be also referred to by those skilled in the art as a subscriber station, a mobile unit, a subscriber unit, a wireless unit, a remote unit, a mobile device, a wireless device, a wireless communication apparatus, a remote device, a mobile subscriber station, an access terminal, a mobile terminal, a wireless terminal, a remote terminal, a handset, a user agent, a mobile client, a client or several other appropriate terms.

The base station eNB may be referred to by those skilled in the art as NB (NodeB), base station (Base Station) or several other appropriate terms.

The terms "determining" and "deciding" used in this specification may include a wide variety of actions. For example, "determining" and "deciding" may include events in which events such as judging, calculating, computing, processing, deriving, investigating, looking up (for example, looking up in a table, a database, or another data structure), or ascertaining are regarded as "determining" or "deciding." Further, "determining" and "deciding" may include events in which events such as receiving (for example, receiving information), transmitting (for example, transmitting information), input, output, or accessing (for example, accessing data in a memory) are regarded as "determining" or "deciding." Further, "determining" and "deciding" may include events in which events such as resolving, selecting, choosing, establishing, or comparing are regarded as "determining" or "deciding." In other words, "determining" and "deciding" may include events in which a certain operation is regarded as "determining" or "deciding."

As used in the present specification, the phrase "based on" does not mean "based only on" unless explicitly stated otherwise. In other words, the phrase "based on" means both "based only on" and "based on at least".

As long as the terms "including", "comprising", and variations thereof are used in the specification or claims, these terms are intended to be inclusive in a manner similar to the term "comprising". Furthermore, it is intended that the term "or" used in the specification or claims is not an "exclusive OR".

In the entirety of the present disclosure, if an article is added by translation, for example a, an and the in English, the elements with those articles can encompass a plurality of elements, unless otherwise indicated apparently in the context.

Although the present invention is described in detail heretofore, it is apparent to those skilled in the art that the present invention is not limited to the embodiment described in this specification. The present invention can be implemented as a modified and changed form without deviating from the scope of the present invention defined by the claims. Accordingly, the description of the present specification is given solely by way of illustration and does not have any restrictive meaning to the present invention.

### REFERENCE SIGNS LIST

- 100, 200: DU
- 300: CU
- 101: radio communication unit
- 102: FH communication unit
- 103: communication control unit
- 104: communication unit
- 301: FH communication unit
- 302: CN communication unit
- 303: communication control device
- 304: communication unit
- 1001: processor
- 1002: memory
- 1003: storage
- 1004: communication device
- 1005: input device
- 1006: output device

## Claims

1. A communication apparatus (200) used as a first communication apparatus in a radio communication system including the first communication apparatus (200) and a second communication apparatus (300), comprising:
a communication unit (104) configured to receive a retransmitted packet addressed to a user equipment from the second communication apparatus, and to transmit the retransmitted packet to the user equipment;
wherein the communication unit (104) is configured to transmit delivery status information including a sequence number of the retransmitted packet to the second communication apparatus, and
wherein the communication unit (104) is configured to receive the retransmitted packet to which a bit indicating retransmission is added from the second communication apparatus.

2. The communication apparatus (200) as claimed in claim 1, wherein
the communication apparatus (104) is configured to transmit the retransmitted packet to the user equipment with priority over a non-retransmission packet.

3. The communication apparatus (200) as claimed in claims 1 or 2, wherein
the delivery status information includes the sequence number of the retransmitted packet and a sequence number of a non-retransmission packet transmitted to the user equipment.

4. A communication method performed by a communication apparatus used as a first communication apparatus in a radio communication system including the first communication apparatus and a second communication apparatus, comprising:
a step of receiving a retransmitted packet addressed to a user equipment from the second communication apparatus, and to transmit the retransmitted packet to the user equipment; and
a step of transmitting delivery status information including a sequence number of the retransmitted packet to the second communication apparatus, wherein
a bit indicating retransmission is added to the retransmitted packet.

5. A radio communication system comprising:
a first communication apparatus comprising: a communication unit configured to receive a retransmitted packet addressed to a user equipment from a second communication apparatus, and to transmit the retransmitted packet to the user equipment, wherein the communication unit transmits delivery status information including a sequence number of the retransmitted packet to the second communication apparatus, and
a second communication apparatus comprising: a communication unit configured to transmit the retransmitted packet addressed to the user equipment to the first communication apparatus, and to receive the delivery status information from the first communication apparatus, wherein
a bit indicating retransmission is added to the retransmitted packet.

## Patentansprüche

1. Kommunikationsvorrichtung (200), die als eine erste Kommunikationsvorrichtung in einem Funkkommunikationssystem verwendet wird, das die erste Kommunikationsvorrichtung (200) und eine zweite Kommunikationsvorrichtung (300) einschließt, umfassend:
eine Kommunikationseinheit (104), die dazu ausgebildet ist, ein erneut übertragenes Paket, das an ein Benutzergerät gerichtet ist, von der zweiten Kommunikationsvorrichtung zu empfangen, und das erneut übertragene Paket an das Benutzergerät zu übertragen;
wobei die Kommunikationseinheit (104) dazu ausgebildet ist, Zustellstatusinformation, die eine Sequenznummer des erneut übertragenen Pakets einschließt, an die zweite Kommunikationsvorrichtung zu übertragen, und
wobei die Kommunikationseinheit (104) dazu ausgebildet ist, das erneut übertragene Paket, zu dem ein eine erneute Übertragung angebendes Bit hinzugefügt ist, von der zweiten Kommunikationsvorrichtung zu empfangen.

2. Kommunikationsvorrichtung (200) nach Anspruch 1, wobei
die Kommunikationsvorrichtung (104) dazu ausgebildet ist, das erneut übertragene Paket an das Benutzergerät mit Priorität vor einem nicht erneut übertragenen Paket zu übertragen.

3. Kommunikationsvorrichtung (200) nach den Ansprüchen 1 oder 2, wobei
die Zustellstatusinformation die Sequenznummer des erneut übertragenen Pakets und eine Sequenznummer eines an das Benutzergerät übertragenen nicht erneut übertragenen Pakets einschließt.

4. Kommunikationsverfahren, das durch eine Kommunikationsvorrichtung durchgeführt wird, die als eine erste Kommunikationsvorrichtung in einem Funkkommunikationssystem verwendet wird, das die erste Kommunikationsvorrichtung und eine zweite Kommunikationsvorrichtung einschließt, umfassend:
einen Schritt des Empfangens eines erneut übertragenen Pakets, das an ein Benutzergerät gerichtet ist, von der zweiten Kommunikationsvorrichtung, und des Übertragens des erneut übertragenen Pakets an das Benutzergerät; und
einen Schritt des Übertragens von Zustellstatusinformation, die eine Sequenznummer des erneut übertragenen Pakets einschließt, an die zweite Kommunikationsvorrichtung, wobei
dem erneut übertragenen Paket ein eine erneute Übertragung angebendes Bit hinzugefügt ist.

5. Funkkommunikationssystem, umfassend:
eine erste Kommunikationsvorrichtung, umfassend: eine Kommunikationseinheit, die dazu ausgebildet ist, ein erneut übertragenes Paket, das an ein Benutzergerät gerichtet ist, von einer zweiten Kommunikationsvorrichtung zu empfangen, und das erneut übertragene Paket an das Benutzergerät zu übertragen, wobei die Kommunikationseinheit Zustellstatusinformation, die eine Sequenznummer des erneut übertragenen Pakets einschließt, an die zweite Kommunikationsvorrichtung überträgt, und
eine zweite Kommunikationsvorrichtung, umfassend: eine Kommunikationseinheit, die dazu ausgebildet ist, das erneut übertragene Paket, das an das Benutzergerät gerichtet ist, an die erste Kommunikationsvorrichtung zu übertragen, und die Zustellstatusinformation von der ersten Kommunikationsvorrichtung zu empfangen, wobei
dem erneut übertragenen Paket ein eine erneute Übertragung angebendes Bit hinzugefügt ist.

## Revendications

1. Dispositif de communication (200) utilisé en tant que premier dispositif de communication dans un système de communication radio incluant le premier dispositif de communication (200) et un deuxième dispositif de communication (300), comprenant :
une unité de communication (104) configurée pour recevoir un paquet retransmis adressé à un équipement utilisateur depuis le deuxième dispositif de communication, et pour transmettre le paquet retransmis à l'équipement utilisateur ;
dans lequel l'unité de communication (104) est configurée pour transmettre des informations d'état de délivrance incluant un numéro de séquence du paquet retransmis au deuxième dispositif de communication, et
dans lequel l'unité de communication (104) est configurée pour recevoir le paquet retransmis auquel un bit indiquant une retransmission est ajouté depuis le deuxième dispositif de communication.

2. Dispositif de communication (200) selon la revendication 1, dans lequel
le dispositif de communication (104) est configuré pour transmettre le paquet retransmis à l'équipement utilisateur avec priorité sur un paquet de non-retransmission.

3. Dispositif de communication (200) selon les revendications 1 ou 2, dans lequel
les informations d'état de délivrance incluent le numéro de séquence du paquet retransmis et un numéro de séquence d'un paquet de non-retransmission transmis à l'équipement utilisateur.

4. Procédé de communication effectué par un dispositif de communication utilisé en tant que premier dispositif de communication dans un système de communication radio incluant le premier dispositif de communication et un deuxième dispositif de communication, comprenant :
une étape de réception d'un paquet retransmis adressé à un équipement utilisateur depuis le deuxième dispositif de communication, et de transmission du paquet retransmis à l'équipement utilisateur ; et
une étape de transmission d'informations d'état de délivrance incluant un numéro de séquence du paquet retransmis au deuxième dispositif de communication, dans lequel
un bit indiquant une retransmission est ajouté au paquet retransmis.

5. Système de communication radio comprenant :
un premier dispositif de communication comprenant : une unité de communication configurée pour recevoir un paquet retransmis adressé à un équipement utilisateur depuis un deuxième dispositif de communication, et pour transmettre le paquet retransmis à l'équipement utilisateur, dans lequel l'unité de communication transmet des informations d'état de délivrance incluant un numéro de séquence du paquet retransmis au deuxième dispositif de communication, et
un deuxième dispositif de communication comprenant : une unité de communication configurée pour transmettre le paquet retransmis adressé à l'équipement utilisateur au premier dispositif de communication, et pour recevoir les informations d'état de délivrance depuis le premier dispositif de communication, dans lequel un bit indiquant une retransmission est ajouté au paquet retransmis.
